# EUROPÄISCHE PATENTANMELDUNG

(11) **EP 2 899 411 A1**
(43) Veröffentlichungstag der Anmeldung: **29.07.2015**
(21) Anmeldenummer: 14004118.7
(22) Anmeldetag: 05.12.2014
(51) Int. Cl.: F16B 7/18, E04B 1/24, E04B 1/00, E04F 15/00

(54) **Anordnung zur Verbindung von Bauteilen, insbesondere von zwei Bauteilen einer Unterkonstruktion, insbesondere für Balkon- und Terrassenabdeckungen**

(30) Priorität: 06.12.2013 DE 202013009842 U; 06.12.2013 DE 202013011000 U
(71) Anmelder: Reif, Ulrich, 72631 Aichtal (DE)
(72) Erfinder: Reif, Ulrich, 72631 Aichtal (DE)
(74) Vertreter: Dosterschill, Peter

(57) **Zusammenfassung**

Die Erfindung betrifft eine Anordnung (1) zur Verbindung von Bauteilen (11,12) einer Unterkonstruktion einer Balkon- und Terrassenabdeckung.

Zwei Bauteile (11, 12) sind mittels eines Verbindungselements (2) miteinander verbunden. Die Bauteile (11,12) weisen Nuten (N11, N12, N13, N21, N22 und N23) auf, die Eingriffselemente (2.E11, ..., 2.E21) des Verbindungselements (2) aufnehmen. Zur Verbindung eines Bauteils (11,12) mit dem Verbindungselement (2) ist lediglich eine Schraube (S) erforderlich. Die Ausgestaltung der Nuten (N11, N12, N13, N21, N22 und N23) und der Eingriffselemente (2.E11, ..., 2.E21) ermöglicht, die Bauteile (11,12) in unterschiedlichen Positionen zueinander zu fixieren. Die Bauteile (11,12) bestehen insbesondere aus AlMgSi 0,5, während die Schraube (S) aus einsatzgehärtetem Stahl, insbesondere mit einer Zinklamellenbeschichtung besteht. Die Schraube (S) verdrängt bei dem Einschraubvorgang das Material des Bauteils (11,12) und bildet im Bauteil (11,12) einen Gewindetunnel (GT), der die Stabilität der Anordnung verstärkt.

## Beschreibung

Die Erfindung betrifft eine Anordnung zur Verbindung von Bauteilen, insbesondere von zwei Bauteilen einer Unterkonstruktion, insbesondere für Balkon- und Terrassenabdeckungen nach dem Oberbegriff des Anspruchs 1, sowie ein Verbindungselement dieser Anordnung nach dem Oberbegriff des Anspruchs 11.

Es sind unterschiedliche Anordnungen zur Verbindung von Bauteilen, insbesondere einer Unterkonstruktion für Balkon- und Terrassenabdeckungen, bekannt.

Beispielsweise werden zwei Bauteile mittels eines Winkelelements miteinander verbunden, wobei eine Wand des Winkelelements mit einem Bauteil verschraubt wird und eine zweite Wand des Winkelelements mit dem anderen Bauteil ebenfalls verschraubt wird. Dabei werden pro Wand jeweils mindestens zwei Schrauben verwendet, um eine sichere Verbindung von Bauteil und Winkelelement zu gewährleisten. Aus der DE 35 13 384 A1, DE 298 04 090 U 1, CH 681 383 A5, CH 650 278 A5 und EP 0 464 367 A1 sind unterschiedliche Verbindungsanordnungen bekannt. Die aus der DE 35 13 384 A1 bekannte Verbindungsanordnung ist nicht in der Lage, uneingeschränkt Scherkräfte aufzunehmen.

Ausgehend von diesem Stand der Technik liegt der Erfindung die Aufgabe zugrunde, eine Anordnung und ein Verbindungselement der eingangs genannten Art anzugeben, mit denen eine hohe Stabilität erzielt wird.

Diese Aufgabe wird durch eine Anordnung und ein Verbindungselement gelöst, die in den Schutzansprüchen 1 und 13 definiert sind.

Vorteilhafte Ausführungsformen der Erfindung sind in den Unteransprüchen definiert.

Die erfindungsgemäße Anordnung umfasst insbesondere zwei Bauteile einer Unterkonstruktion, insbesondere für Balkon- und Terrassenabdeckungen, wobei die Bauteile, die mit einem Verbindungselement verbunden sind. Das Verbindungselement hat zwei Wände, wobei jede Wand jeweils eine Öffnung für genau eine Schraube aufweist. Genau eine Schraube pro Wand des Verbindungselements ist für eine sichere Verbindung ausreichend, da Eingriffselemente auf der den Bauteilen zugewandten Seiten der Wände Eingriffselemente aufweisen, die in Aufnahmeöffnungen (Nuten) des jeweiligen Bauteils eingreifen.

Die erfindungsgemäße Anordnung zeichnet sich durch den ersten Vorteil aus, dass aufgrund der nur einen Schraube pro Wand des Verbindungselements die Anordnung vergleichsweise kostengünstig hergestellt werden kann.

Ein zweiter Vorteil besteht darin, dass die Montage eines Verbindungselements mit nur einer Schraube pro Wand weniger Zeit beansprucht als die Montage eines Verbindungselements mit mehreren Schrauben pro Wand.

Ein dritter Vorteil besteht darin, dass durch die Ausgestaltung des Verbindungselements mit den Eingriffselementen einerseits und mit den sie aufnehmenden Nuten in den Bauteilen andererseits diese in einer Mehrzahl von Zuordnungen zueinander verbunden werden können. Die langgestreckte Ausgestaltung der Nuten ermöglicht zudem eine flexible Positionierung der Verbindungselemente an unterschiedlichen Stellen je nach örtlichem Bedarf.

Ein vierter Vorteil besteht darin, dass durch die Ausgestaltung der Nuten in den Bauteilen einerseits und die Ausgestaltung der Eingriffselemente in den Verbindungselementen sichergestellt wird, dass die verbundenen Bauteile ausnahmslos bündig beziehungsweise höhengleich mit einander verbunden sind.

Unebenheiten der Balkon- und Terrassenabdeckungen werden damit vermieden.

Ein fünfter Vorteil besteht darin, dass die erfindungsgemäße Anordnung form- und kraftschlüssig ist, so dass alle Scher- und Torsionskräfte von den Eingriffselementen aufgenommen werden, womit in vorteilhafter Weise eine vergleichsweise hohe Stabilität der Anordnung erzielt wird.

Eine vorteilhafte Ausführungsform der erfindungsgemäßen Anordnung ist dadurch gekennzeichnet, dass die Nut im Bauteil, die die Schraube aufnimmt, in der Weise ausgestaltet ist, dass die Schraube bei ihrer Einführung in die Nut bei einem Erstkontakt diese ausschließlich mit ihrem Schraubgewinde berührt. Das Bauteil besteht aus einem ersten Material, insbesondere aus einer aushärtbaren Legierung, insbesondere aus AlMgSi 0,5, und erhält einen durch die eingeschraubte erste Schraube gebildeten Gewindetunnel aus verdrängtem ersten Material. Das Einschrauben erfolgt in einfacher Weise mittels herkömmlicher Werkzeuge und der durch den Einschraubvorgang gebildete Gewindetunnel verstärkt in vorteilhafter Weise die Fixierung der Schraube im Bauteil. Die Schraube (S1) besteht aus einem zweiten Material, insbesondere aus einsatzgehärtetem Stahl, insbesondere mit einer Zinklamellenbeschichtung. Bei dieser Kombination aus erstem Material des Bauteils und zweitem Material der Schraube entsteht bei dem Einschraubvorgang in vorteilhafter Weise der vorstehend genannte Gewindetunnel, der zur Stabilität der Anordnung beträgt, jedoch entstehen keine Metallspäne, die Unfälle oder Schäden an benachbarten Bauteilen (Abdichtungen) beziehungsweise Schäden an einer Dachisolierung verursachen könnten und zu entsorgen sind. Damit wird der Herstellvorgang zur Herstellung der erfindungsgemäßen Anordnung sicherer und einfacher.

Nachfolgend wird die Erfindung anhand von Ausführungsbeispielen unter Bezug auf die Zeichnungen näher erläutert.

Es zeigen:
- Figuren 1a, 1b: eine erste Ausführungsform der Anordnung mit zwei verbundenen Bauteilen und einem Verbindungselement in unterschiedlichen Ausführungsformen gemäß der Erfindung in Perspektivansicht;
- Figuren 2a, 2b: eine erste Ausführungsform des Verbindungselements nach Figur 1 in unterschiedlichen Ansichten;
- Figuren 3a, 3b: eine zweite Ausführungsform des Verbindungselements nach Figur 1 in unterschiedlichen Ansichten;
- Figuren 4a, 4b: eine dritte Ausführungsform des Verbindungselements nach Figur 1 in unterschiedlichen Ansichten;
- Figuren 5a, 5b, 5c: unterschiedliche Anordnungen der ersten Ausführungsform des Verbindungselements nach Figur 2 an einem ersten Bauteil nach Figur 1;
- Figuren 6a, 6b, 6c: unterschiedliche Anordnungen der zweiten Ausführungsform des Verbindungselements nach Figur 3 an einem ersten Bauteil nach Figur 1;
- Figuren 7a, 7b, 7c: unterschiedliche Anordnungen der dritten Ausführungsform des Verbindungselements nach Figur 4 an einem ersten Bauteil nach Figur 1;
- Figur 8: eine vierte Ausführungsform des Verbindungselements nach Figur 1;
- Figur 9: eine fünfte Ausführungsform des Verbindungselements nach Figur 1;
- Figur 10: eine sechste Ausführungsform des Verbindungselements nach Figur 1;
- Figur 11: eine siebente Ausführungsform des Verbindungselements nach Figur 1;
- Figur 12: eine achte Ausführungsform des Verbindungselements nach Figur 1;
- Figur 13: eine weitere Ausführungsform der Anordnung mit zwei übereinander angeordneten Bauteilen und einer neunten Ausführungsform des Verbindungselements nach Figur 1;
- Figuren 14a, 14b, 14c: eine für die Bauteile nach Figur 1 mit einer ersten Nut verwendete Schraubverbindung; und
- Figuren 15a, 15b, 15c: eine für die Bauteile nach Figur 1 mit einer zweiten Nut verwendete Schraubverbindung.

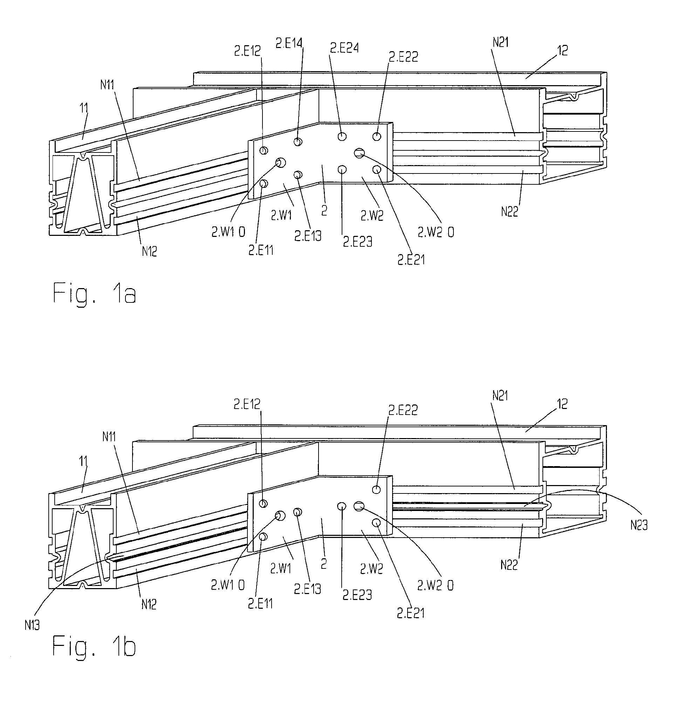

Die in Figur 1 dargestellte Anordnung zeigt ein erstes Bauteil 11 und ein zweites Bauteil 12, wobei beide Bauteile 11, 12 Teile einer Unterkonstruktion für Balkon- oder Terrassenabdeckungen sind.

Beide Bauteile 11 und 12 sind bei den in den Figuren 1 a und 1 b dargestellten Ausführungsformen rechtwinklig nebeneinander angeordnet und mittels eines Verbindungselements 2 miteinander verbunden.

Das Verbindungselement 2 hat eine erste Wand 2.W1 und eine zweite Wand 2.W2, wobei die erste Wand 2.W1 und die zweite Wand 2.W2 in einem Winkel von 90° zueinander angeordnet sind.

Die erste Wand 2.W1 liegt an dem ersten Bauteil 11 an, während die zweite Wand 2.W2 an dem zweiten Bauteil 12 anliegt.

Die erste Wand 2.W1 weist genau eine erste Öffnung 2.W10 für genau eine erste Schraube (S1) auf, während die zweite Wand 2.W2 genau eine zweite Öffnung 2.W20 für genau eine Schraube aufweist. Vorzugsweise sind beide Schrauben baugleich.

An der Stelle der ersten Öffnung 2.W10 des Verbindungselements 2 ist im ersten Bauteil 11 eine entsprechende Öffnung für die Aufnahme der ersten Schraube S1 vorgesehen, mit der das Verbindungsteil 2 und das erste Bauteil 11 miteinander verschraubt werden.

Dementsprechend ist an der Stelle der zweiten Öffnung 2.W20 des Verbindungselements 2 im zweiten Bauteil 12 eine entsprechende Öffnung für die Aufnahme der zweiten Schraube vorgesehen, mit der das Verbindungsteil 2 und das zweite Bauteil 12 miteinander verschraubt werden.

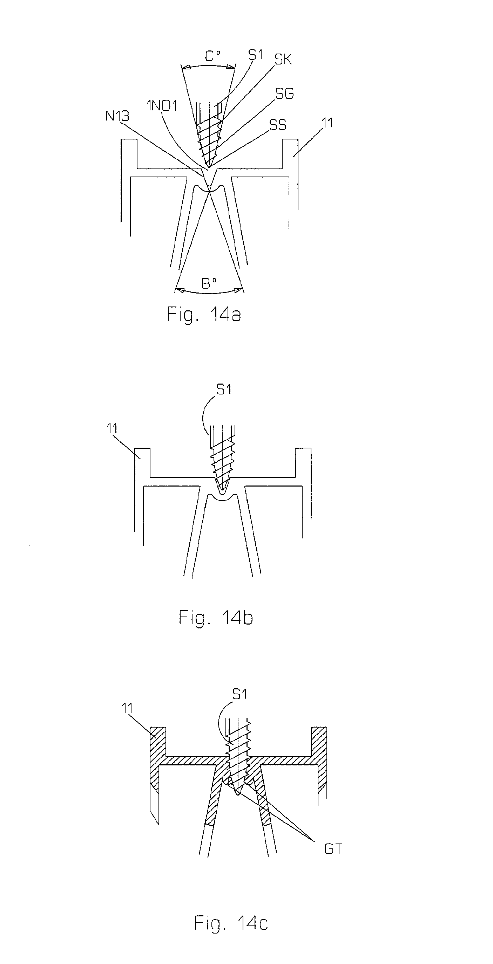

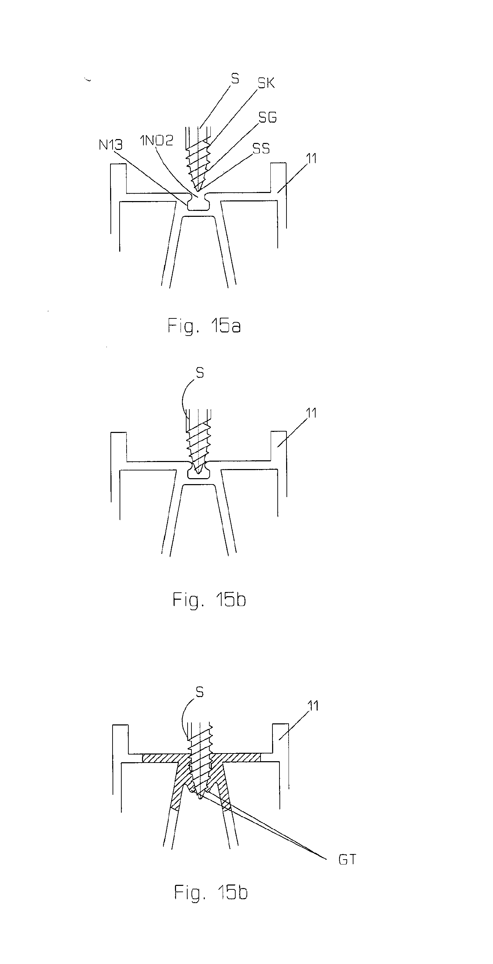

Insbesondere ist vorgesehen, dass die vorgenannten Öffnungen, durch das Einschrauben der Schrauben gebildet werden (entsprechend Figuren 14 und 15).

Während das in Figur 1 a dargestellte Verbindungselement 2 in jeder Wand 2.W1 und 2.W2 vier Eingriffselemente 2.E11, 2.E12, 2.E13, 2.E14. beziehungsweise 2.E21, 2.E22, 2.E23, 2.E24 aufweist, weist das in Figur 1b dargestellte Verbindungselement 2 in jeder Wand 2.W1 und 2.W2 drei Eingriffselemente 2.E11, 2.E12, 2.E13 beziehungsweise 2.E21, 2.E22, 2.E23 auf.

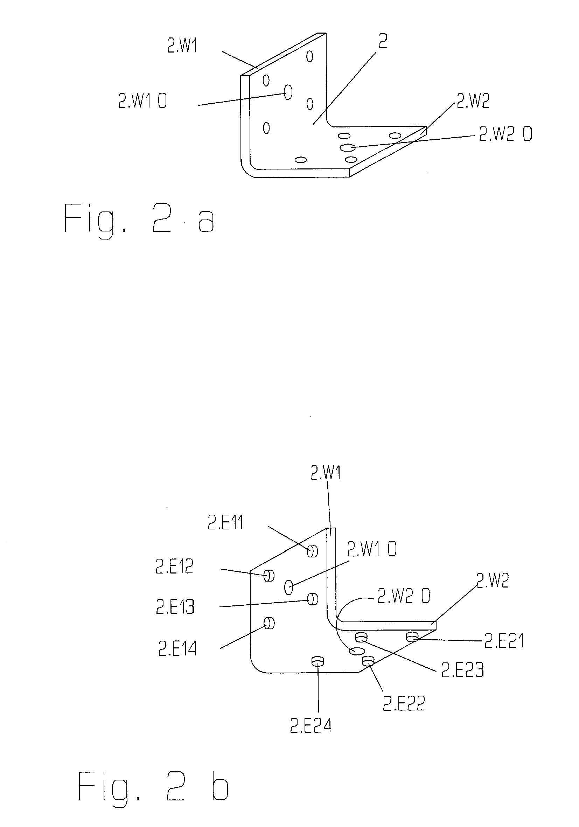

In den Figuren 2a und 2b ist eine Ausführungsform des Verbindungselementes 2 in perspektivischer Ansicht dargestellt.

Wie in Figur 2b für die erste Wand 2.W1 dargestellt, hat diese auf ihrer dem ersten Bauteil 11 zugewandten Seite vier Eingriffselemente 2.E11, 2.E12, 2.E13, 2.E14. Diese greifen im montierten Zustand in korrespondierende Aufnahmeöffnungen des ersten Bauteils 11 ein. Figur 2a zeigt in Form von vier Kreisen die Stellen der ersten Wand 2.W1, an denen die vier Eingriffselemente 2.E11, 2.E12, 2.E13, 2.E14 auf dem ersten Bauteil 11 zugewandten Seite (Figur 2b) angeordnet sind. Die Aufnahmeöffnungen werden durch Nuten gebildet (Figuren 1a, 1b, 5a, 5b, 5c, 6a, 6b, 6c, 7a, 7b, 7c, 8 bis 13).

In gleicher Weise ist die zweite Wand 2.W2 des Verbindungselements 2 ausgestaltet:

Die zweite Wand 2.W2, die im montierten Zustand an dem zweiten Bauteil 12 anliegt, weist auf ihrer dem zweiten Bauteil 12 zugewandten Seite vier Eingriffselemente 2.E21, 2.E22, 2.E23, 2.E24 auf, die im montierten Zustand in korrespondierende Aufnahmeöffnungen des zweiten Bauteils 12 eingreifen.

Die sichere Befestigung mit nur einer Schraube (S1 in Figur 14) anstelle mehrerer Schrauben pro Wand des Verbindungselements 2 wird zum einen durch die Ausgestaltung des Verbindungselements 2 an der dem jeweiligen Bauteil 11, 12 zugewandten Seite der ersten Wand 2.W1 und der zweiten Wand 2.W2 mit Eingriffselementen 2.E11, ..., 2.E14; 2.E21, ..., 2.E24 ermöglicht, zum anderen durch die erfindungsgemäß vorgesehene Schraubverbindung, bei der, wie noch beschrieben wird, die jeweilige Schraube bei dem Einschrauben in das jeweilige Bauteil 11, 12 das Material M1 (zum Beispiel Aluminium oder Aluminiumlegierung, AlMgSi 0,5) des Bauteils 1 verdrängt und einen Gewindetunnel (GT, Figur 14c) bildet, der die Fixierung der eingeschraubten Schraube im Bauteil 11 beziehungsweise 12 verstärkt.

Diese so hergestellte Befestigung mit nur einer Schraube anstelle mehrerer Schrauben pro Wand des Verbindungselements 2 wird, wie noch beschrieben wird, durch eine definierte Ausgestaltung von Aufnahmeelementen in Form von Nuten N11, N12, N13; N21, N22; N23 in den Bauteilen 11, 12 sowie durch eine definierte Ausgestaltung der Eingriffselemente in den Verbindungselementen 2 erzielt; vorzugsweise wird jede Wand des Verbindungselements 2 mit drei oder vier Eingriffselementen ausgestattet, die unterschiedlich zueinander angeordnet sein können. Die Ausführungsform des Verbindungselements 2 mit vier Eingriffselementen ist in den Figuren 1a, 2, 5, 8, 9, 10, 11, 12 und 13 dargestellt und wie folgt ausgestaltet:

In den beiden Wänden 2.W1, 2.W2 sind auf ihrer dem jeweiligen Bauteil zugwandten Seite, wie in Figur 2b für die erste Wand 2.W1 dargestellt, in den vier Eckbereichen der rechteckigen Oberfläche der Wand 2.W1 vier erste Eingriffselemente 2.E11, 2.E12, 2.E13, 2.E14 vorgesehen.

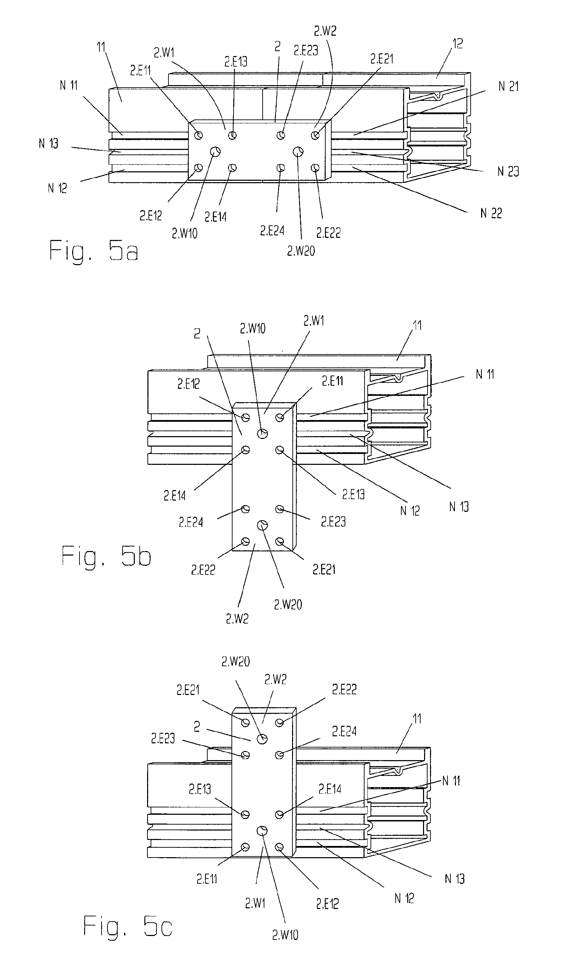

In gleicher Ausgestaltung sind in den vier Eckbereichen der rechteckigen Oberfläche der Wand 2.W2 vier zweite Eingriffselemente 2.E21, 2.E22, 2.E23, 2.E24 vorgesehen. Die ersten und zweiten Eingriffselemente sind damit jeweils an den Eckpunkten eines Quadrats angeordnet, wie unter anderem auch in den Figuren 5a, 5b und 5c dargestellt.

Bei der in Figur 2b dargestellten Ausführungsform der ersten Wand 2.W1 des Verbindungselements 2 sind die ersten Eingriffselemente 2.E11 und 2.E12 nebeneinander auf einer gedachten ersten horizontalen Linie angeordnet, während die ersten Eingriffselemente 2.E13 und 2.E14 des Verbindungselements 2 nebeneinander auf einer gedachten zweiten horizontalen Linie angeordnet sind, die zu der ersten gedachten horizontalen Linie parallel und unter dieser verläuft.

Wie in Figur 5ab dargestellt, verläuft in der vorgenannten ersten horizontalen Linie im ersten Bauteil 11 eine erste Nut N11 (beispielsweise in Figuren 1a, 1b, 5a) und in der der vorgenannten zweiten horizontalen Linie verläuft im ersten Bauteil 11 eine zweite Nut N12 (beispielsweise in Figuren 1a, 1b, 5a).

Ebenso verläuft hinsichtlich des zweiten Bauteils 12 in der vorgenannten ersten horizontalen Linie eine erste Nut N21 (Figuren 1a, 1b) und in der der vorgenannten zweiten horizontalen Linie verläuft im zweiten Bauteil 12 eine zweite Nut N22 (Figuren 1a, 1 b).

Weiterhin sind bei der in Figur 2b dargestellten Ausführungsform die Eingriffselemente 2.E11 und 2.E13 des Verbindungselements 2 untereinander auf einer gedachten ersten vertikalen Linie angeordnet, während die ersten Eingriffselemente 2.E12 und 2.E14 des Verbindungselements 2 untereinander auf einer gedachten zweiten vertikalen Linie angeordnet sind, die zu der ersten gedachten vertikalen Linie parallel und neben dieser verläuft.

Wie in Figur 5a dargestellt, greifen die vier ersten Eingriffselemente 2.E11 bis 2.E14 der ersten Wand 2.W1 im montierten Zustand in korrespondierende Aufnahmeöffnungen des ersten Bauteils 11 ein, wobei die zwei ersten Eingriffselemente 2.E11 und 2.E13 in eine erste Nut N11 des ersten Bauteils 11 eingreifen, während die zwei ersten Eingriffselemente 2.E12 und 2.E14 in eine zweite Nut N12 des ersten Bauteils 11 eingreifen.

Dementsprechend greifen die vier zweiten Eingriffselemente der zweiten Wand 2.W2 des Verbindungselements 2 im montierten Zustand in korrespondierende Aufnahmeöffnungen des zweiten Bauteils 12 ein, wobei zwei zweite Eingriffselemente in eine erste Nut N21 des zweiten Bauteils 12 eingreifen, während zwei weitere zweite Eingriffselemente in eine zweite Nut N22 des zweiten Bauteils 12 eingreifen.

Die ersten und/oder zweiten Eingriffselemente 2.E11, ..., 2.E14; 2.E21, ..., 2.E24 sind erhaben, insbesondere noppenförmig ausgestaltet. Alternativ hierzu können sie auch andere Formen aufweisen, wie beispielsweise eine keilförmige Form; sie können auch als Feder ausgeformt sein.

Damit ergibt sich,
- dass ein erster Teil der Eingriffselemente der ersten Wand 2.W1 nämlich 2.E11, 2.E13 im montierten Zustand in korrespondierende erste Aufnahmeöffnungen (N11 in Figur 5 a) des ersten Bauteils 11 eingreift, und
- dass ein zweiter Teil der Eingriffselemente der ersten Wand 2.W1, nämlich 2.E12, 2.E14 im montierten Zustand in korrespondierende zweite Aufnahmeöffnungen (N12 in Figur 5a) des ersten Bauteils 1 eingreift.

Weiterhin ergibt sich,
- dass ein erster Teil der Eingriffselemente der zweiten Wand 2.W2, nämlich 2.E21, 2.E23 im montierten Zustand in korrespondierende erste Aufnahmeöffnungen (N21 in Figur 5a) des zweiten Bauteils 12 eingreift, und
- dass ein zweiter Teil der Eingriffselemente der zweiten Wand 2.W2, nämlich 2.E22, 2.E24 im montierten Zustand in korrespondierende zweite Aufnahmeöffnungen (N22 in Figur 5a) des zweiten Bauteils 12 eingreift.

Die Figuren 5a, 5b und 5c veranschaulichen, dass das Verbindungselement 2 mit vier Eingriffselementen pro Verbindungselementwand 2.W1, 2.W2 in unterschiedlichen Positionen in das erste Bauteil 11 eingesetzt werden können, so dass zwei Bauteile 11, 12 unterschiedlich zueinander angeordnet werden können.

Während Figur 5a eine erste Anordnung zeigt, in der die Eingriffselemente 2.E11 und 2.E13 in die erste Nut N11des Bauteils 11 eingreifen und in der die Eingriffselemente 2.E12 und 2.E14 in die zweite Nut N12 des Bauteils 11 eingreifen, zeigt Figur 5b eine zweite Anordnung, in der die Eingriffselemente 2.E12 und 2.E11 in die erste Nut N11 eingreifen und in der die Eingriffselemente 2.E13 und 2.E14 in die zweite Nut N12 eingreifen.

Bei der in den Figuren 5a und 5b gezeigten und zuvor beschriebenen ersten und zweiten Anordnung ist das Verbindungselement 2 um 90° versetzt. Diese unterschiedlichen Anordnung des Verbindungselements 2 an einem Bauteil 11 wird zum einen durch die Anordnung der vier Eingriffselemente 2.E11, ..., 2.E14 und zum anderen durch die Anordnung der ersten und zweiten Nut N11, N12 im ersten Bauteil 11 ermöglicht.

Bei der in den Figur 5c gezeigten Anordnung ist das Verbindungselement 2 um 90° gegenüber der Anordnung nach Figur 5a und um 180° und gegenüber der Anordnung nach Figur 5b versetzt.

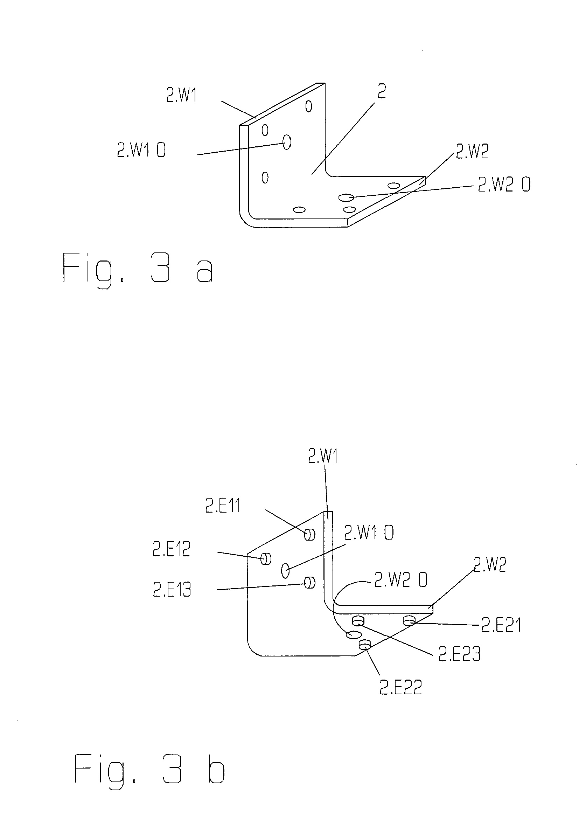

Die Ausführungsform des Verbindungselements 2 mit drei Eingriffselementen ist in den Figuren 3, 4, 6 und 7 dargestellt und wie folgt ausgestaltet, wobei zwei Varianten für die Anordnung der drei Eingriffselemente beschrieben werden.

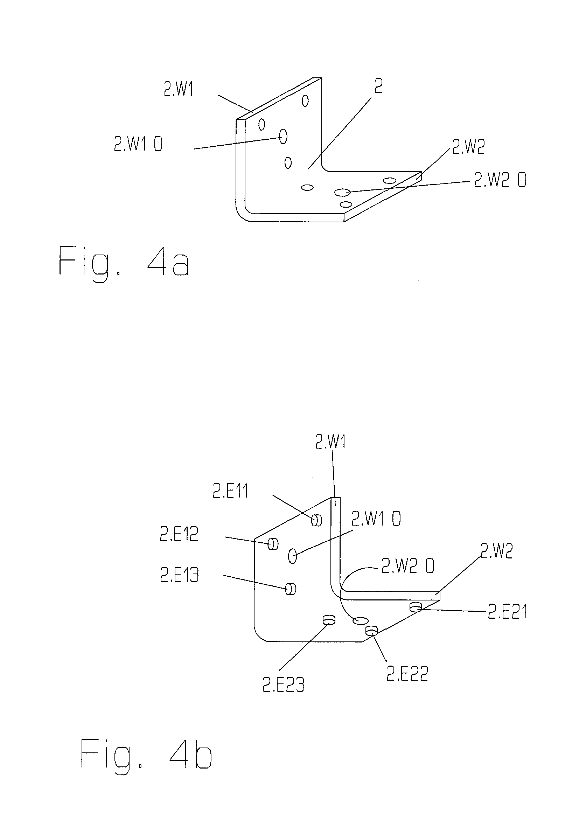

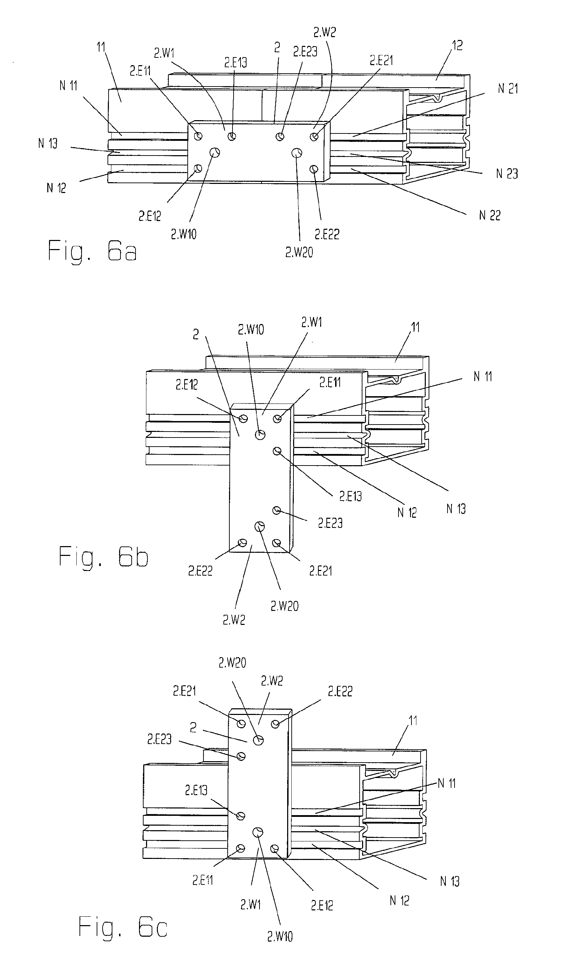

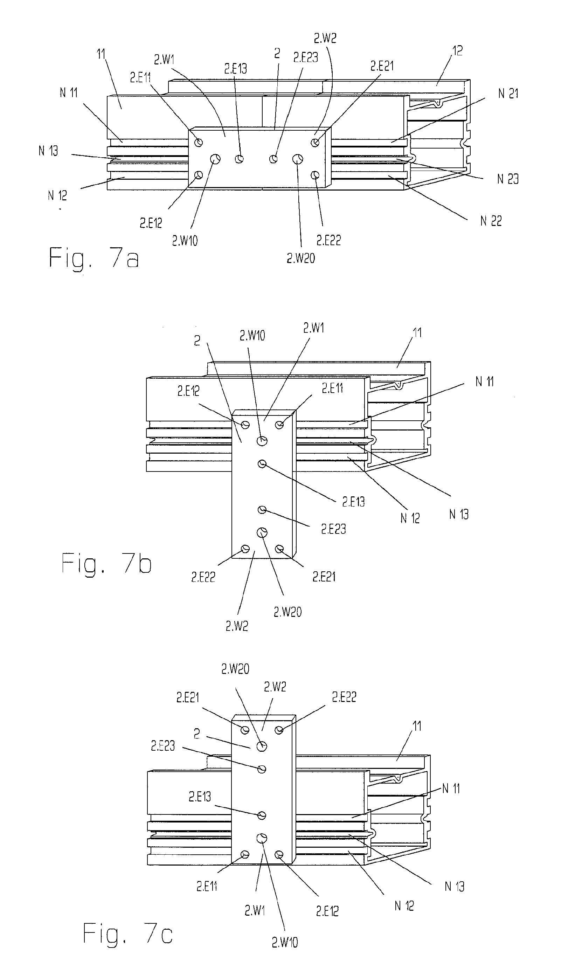

Dabei sind in einer ersten Variante, die in den Figuren 3 und 6 dargestellt ist, die drei Eingriffselemente 2.E11, 2.E12, 2.E13 an drei Eckpunkten eines Quadrats angeordnet, wobei in einer zweiten Variante, die in den Figuren 4 und 7 dargestellt ist, zwei (2.E11, 2E12) der drei Eingriffselemente an zwei Eckpunkten des Quadrats angeordnet sind, während das dritte Eingriffselement (2.E13) zwischen den zwei verbleibenden Eckpunkten des Quadrats, in der Mitte der Strecke zwischen diesen verbleibenden Eckpunkten, angeordnet ist.

Mit der vorstehend genannten Anordnung des dritten Eingriffselements wird dieses im zugehörigen Bauteil (11, 12) in einer ("dritten") Nut (N13, N23) angeordnet, die ebenfalls für die Fixierung der ersten Schraube S1 (Figur 14) beziehungsweise einer zweiten Schraube mitverwendet wird.

Die Figuren 6a, 6b und 6bc veranschaulichen die zuvor genannte erste Variante, bei der das Verbindungselement 2 mit drei Eingriffselementen pro Verbindungselementwand 2.W1, 2.W2 in unterschiedliche Positionen in das erste Bauteil 11 eingesetzt werden können.

Während Figur 6a eine erste Anordnung zeigt, in der die Eingriffselemente 2.E11 und 2.E13 in die erste Nut N11des Bauteils 11 eingreifen und in der das Eingriffselement 2.E12 in die zweite Nut N12 des Bauteils 11 eingreift, zeigt Figur 6b eine zweite Anordnung, bei der die Eingriffselemente 2.E12 und 2.E11 in die erste Nut N11eingreifen und bei der das Eingriffselement 2.E13 in die zweite Nut N12 eingreift.

Bei der in den Figuren 6a und 6b gezeigten und zuvor beschriebenen ersten und zweiten Anordnung ist das Verbindungselement 2 um 90° versetzt. Bei der in der Figur 6c gezeigten Anordnung ist das Verbindungselement 2 um 90° gegenüber der Anordnung nach Figur 6a und um 180° und gegenüber der Anordnung nach Figur 6b versetzt.

Diese unterschiedlichen Anordnungen des Verbindungselements 2 an einem Bauteil 11 werden zum einen durch die Anordnung der drei Eingriffselemente 2.E11, 2.E12, 2.E13 und zum anderen durch die Anordnung der Nuten N11, N12, N13 im ersten Bauteil 11 ermöglicht.

Die Figuren 7a, 7b und 7c veranschaulichen die zuvor genannte zweite Variante, bei der das Verbindungselement 2 mit drei Eingriffselementen pro Verbindungselementwand 2.W1, 2.W2 ebenfalls in unterschiedlichen Positionen in das erste Bauteil 11 eingesetzt werden kann.

Figur 7a zeigt eine erste Anordnung zeigt, in der das Eingriffselement 2.E11 in die erste Nut N11des Bauteils 11 eingreift, in der das Eingriffselement 2.E12 in die zweite Nut N12 des Bauteils 11 eingreift und in der das Eingriffselement 2.E13 in die dritte Nut N13 des Bauteils 11 eingreift, allerdings nicht (wie in Figur 6a) an einem Eckpunkt eines Quadrats, sondern in derselben horizontalen Linie, in der die Öffnung 2.W10 angeordnet ist. Diese ist auch im Schnittpunkt der zwei Diagonalen des gedachten Quadrats angeordnet.

Demgegenüber zeigt Figur 7b eine zweite Anordnung, in der die Eingriffselemente 2.E12 und 2.E11 in die erste Nut N11eingreifen und in der das Eingriffselement 2.E13 in die zweite Nut N12 eingreift. In der dritten Nut N13 ist die Öffnung 2.W10 angeordnet, die die erste Schraube (S1 in Figur 14) für die Verbindung des Verbindungselements 2 mit dem ersten Bauteil 11 aufnimmt.

Bei der in den Figuren 7a und 7b gezeigten und zuvor beschriebenen ersten und zweiten Anordnung ist das Verbindungselement 2 um 90° versetzt. Diese unterschiedlichen Anordnungen des Verbindungselements 2 an einem Bauteil 11 wird zum einen durch die Anordnung der drei Eingriffselemente 2.E11, 2.E12, 2.E13 und zum anderen durch die Anordnung der ersten, zweiten und dritten Nut N11, N12, N13 im ersten Bauteil 11 ermöglicht.

Bei der in den Figur 7c gezeigten Anordnung ist das Verbindungselement 2 um 90° gegenüber der Anordnung nach Figur 7a und um 180° und gegenüber der Anordnung nach Figur 7b versetzt.

Die Wände 2.W1 und 2.W2 des Verbindungselements 2 können anstelle von vier oder drei Eingriffselementen auch eine andere Zahl von Eingriffselementen enthalten. Dabei korrespondiert die Ausgestaltung der Eingriffselemente, insbesondere ihre Anzahl und ihre Anordnung, mit der Ausgestaltung der Nuten insbesondere N11, N12, N13, N21, N22, N23 in der Weise, dass sich die Verbindungselemente in der beschriebenen Weise an den Bauteilen 11, 12 befestigen lassen, wie dies auch anhand der Figuren 1a, 1b, 5a, 5b, 5c, 6a, 6b, 6c, 7a, 7b, 7c, 8 und 9 dargestellt ist.

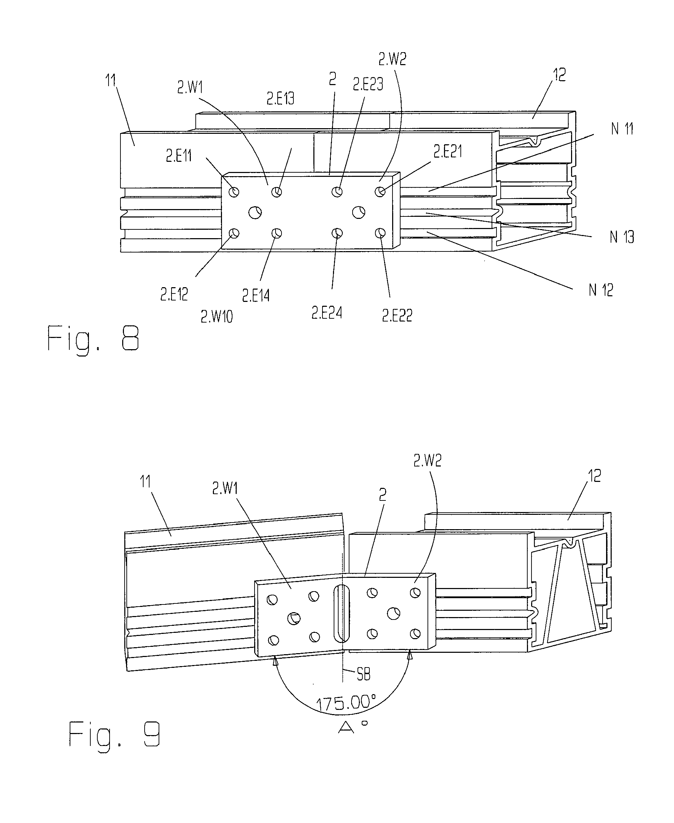

Die in Figur 9 dargestellte Ausführungsform des Verbindungselements 2 hat eine Sollbiegestelle SB, die die erste Wand 2.W1 und die zweite Wand 2.W2 definiert. Die beiden Wände der in Figur 9 dargestellten Ausführungsform sind in einem Winkel A von etwa 175° zueinander angeordnet. Das erste Bauteil 11 hat in seinem Innenraum zwei Streben, die als Werkzeug verwendet werden können, um das Verbindungselement 2 an seiner Sollbiegestelle SB ausgehend von seinem ebenen Grundzustand, in der die Wände 2.W1 und 2.W2 einen Winkel von 180° einnehmen, in die gewünschte Form, beispielsweise mit dem Winkel von etwa 175°, zu bringen. Hierzu wird das Verbindungselement 2 in das Bauteil 11 zwischen einer Strebe und der benachbarten Seitenwand eingeführt und von 180° auf 175° gebogen.

Bei der in Figur 1 dargestellten Ausführungsform sind das erste Bauteil 11 und das zweite Bauteil 12 linienförmig, im rechten Winkel aneinander angeordnet; hierauf ist die Erfindung jedoch nicht eingeschränkt.

Vielmehr kann das Verbindungselement 2 in unterschiedlicher Weise ausgestaltet sein.

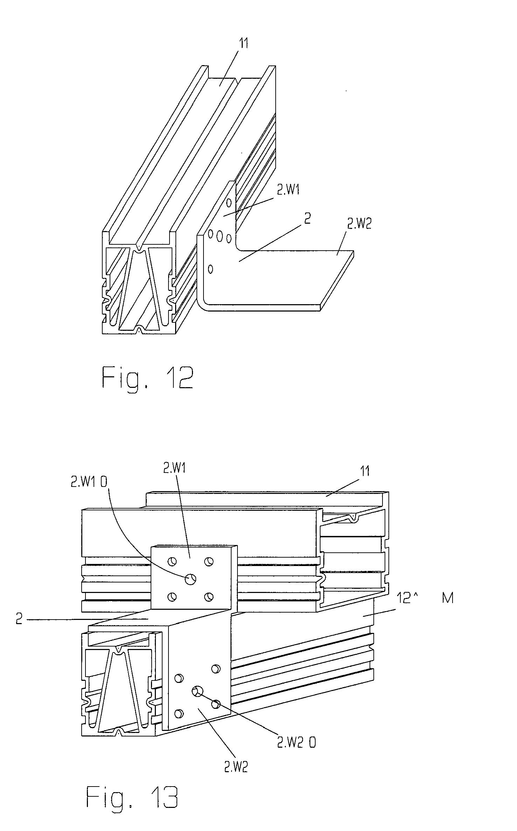

So können die erste Wand 2.W1 und die zweite Wand 1.W2 nebeneinander angeordnet sein (Figuren 1, 8 und 9) oder unter- beziehungsweise übereinander (Figur 13), weiterhin können sie unterschiedliche Winkel zu einander definieren (zum Beispiel 90° in den Figuren 1, 2, 3, 4, 180° in den Figur 5a, 6a, 7a, 8, 175° in Figur 9).

Weiterhin können die Öffnung 2.W1O in der ersten Wand 2.W1 und die Öffnung 2.W20 in der der zweiten Wand 2.W2 des Verbindungselements 2 an unterschiedlichen Orten des Verbindungselements 2 anordnet werden.

Das Verbindungselement 2 kann Wände 2.W1 und 2W2 aufweisen, die jeweils nicht vier oder drei Eingriffselemente aufweisen, sondern eine andere Zahl von Eingriffselementen. Die Ausgestaltung der Eingriffselemente, ihre Anzahl und ihre Anordnung auf dem Verbindungselement 2, korrespondiert mit der Ausgestaltung der Nuten, hier N11, N12, N13, N21, N22, N23 in der Weise, dass sich das Verbindungselement 2 in unterschiedlichen Positionen auf den Bauteilen 11, 12 befestigen lassen, wie dies in beispielsweise in den Figuren 5a, 5b, 5c, 6a, 6b, 6c und 7a, 7b, 7c dargestellt ist. Diese Darstellungen zeigen jeweils um 90° versetzte Positionen des Verbindungselements 2 auf einem Bauteil 11.

So kann das Verbindungselement 2 kann Wände 2.W1 und 2W2 aufweisen, die beispielsweise acht Eingriffselemente aufweisen. Dabei liegen vier Eingriffselemente in den Eckpunkten eines Quadrats (siehe Figuren 1a, 2a, 2b, 5a, 5b, 5c, 8, 9, 10 - 13), während weitere vier Eingriffselemente auf jeweils einer horizontalen bzw. vertikalen Verbindungslinie der vorgenannten Quadrateckpunkte in der Mitte der jeweiligen Verbindungslinie liegen. Die acht Eingriffselemente greifen in die Nuten N11, N12, N13, N21, N22, N23 ein.

Die erste Wand 2.W1 und die zweite Wand 2.W2 können gleiche oder unterschiedliche Abmessungen aufweisen. Damit lassen sich unterschiedliche Zuordnungen der beiden miteinander zu verbindenden Bauteile 11, 12 realisieren. Bei der in Figur 12 dargestellten Ausführungsform weist die zweite Wand 2.W2 weder eine Öffnung für eine Schraube noch Eingriffselemente auf. Die zweite Wand kann bei dieser Ausführungsform beispielsweise als ein Träger für ein Gewichtselement (Stein- oder Betonplatte, Gabione) dienen.

Die erste und/oder zweite Wand des Verbindungselements 2 kann mehr als Öffnung 2.W10, 2.W20 aufweisen, womit die Schraube S1 (Figuren 14, 15) an unterschiedlichen, eng benachbarten Stellen in das jeweilige Bauteil 11, 12 eingefügt werden kann. Diese Öffnung kann auch eine Langlochöffnung sein.

Das erste Bauteil 11 und das zweite Bauteil 12 sind horizontal zueinander oder vertikal zueinander angeordnet. Bei der in Figur 13 dargestellten Ausführungsform sind die beiden Bauteile 11, 12 vertikal zueinander angeordnet. Figur 13 zeigt auch eine weitere Ausführungsform des Verteilungselements 2 mit zwei in unterschiedlichen Ebenen um 90° versetzten Wänden 2.W1 und 2.W2.

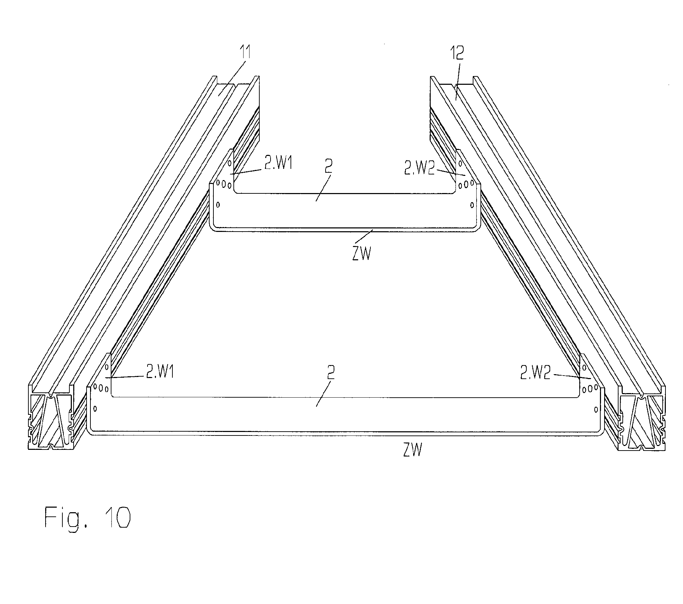

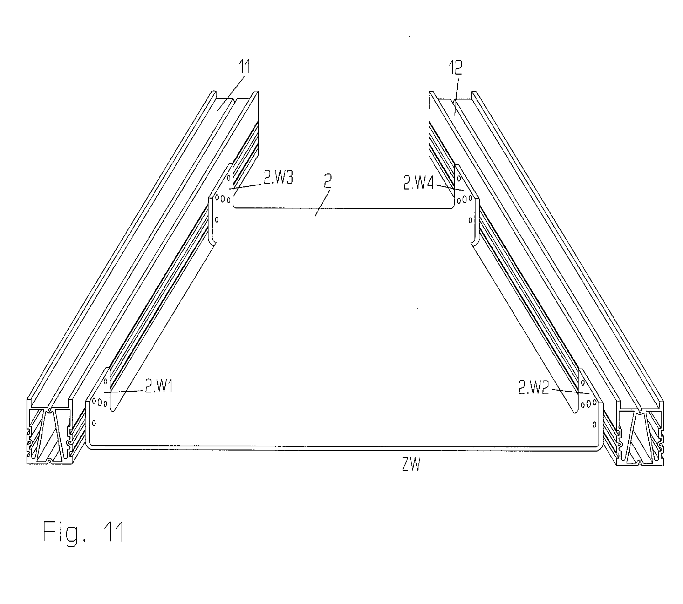

Das Verbindungselement kann eine Zwischenwand ZW aufweisen, die zwischen der ersten Wand 2.W1 und der zweiten Wand 2.W2 eines Verbindungselements 2 angeordnet ist. Diese Ausführungsformen sind in den Figuren 10 und 11 dargestellt.

Figur 11 zeigt eine Ausführungsform, bei der die Zwischenwand ZW eine Platte bildet, die eine vergleichsweise große Fläche hat. An der Platte sind vier Wände 2. W1, 2.W2, 2.W3 und 2.W4 von zwei Verbindungselementen 2 angeordnet, die mit dem ersten Bauteil 11 bzw. mit dem zweiten Bauteil 12 verbunden sind.

Figur 14 zeigt eine erste Schraube S1, die vorzugsweise in die Öffnung 2.W10 der ersten Wand 2.W1 eines Verbindungselements 2 eingeführt und in die Nut N13 des ersten Bauteils 11 eingeschraubt wird. Vorzugsweise wird eine baugleiche zweite Schraube verwendet, die in die Öffnung 2.W20 der zweiten Wand 2.W2 des Verbindungselements 2 eingeführt und in die Nut N23 des zweiten Bauteils 12 eingeschraubt wird.

Die Schraube S1, die erfindungsgemäß verwendet wird und in Figur 14 dargestellt ist, hat einen Schraubkern SK, eine Schraubspitze SS und ein oberhalb der Schraubspitze SS angeordnetes Schraubgewinde SG (Figur 14a). Das erste Bauteil 11 besteht aus einem ersten Material M1, insbesondere aus einer aushärtbaren Legierung, insbesondere aus AlMgSi 0,5 und die Schraube S1 besteht aus einem zweiten Material M2, insbesondere aus einsatzgehärtetem Stahl, insbesondere mit einer Zinklamellenbeschichtung.

Die Schraubspitze ist ihrer Kontur nach eine Blechschraube nach DIN 7981. Ebenso entspricht das Gewindeprofil der DIN 7981.

Der Übergang von dem eigentlichen Kopf zum Schraubschaft ist wie der entsprechende Übergang bei einer Setzkopfschraube ausgestaltet.

Die Nut N13 ist in der Weise ausgestaltet, dass die Schraube S1 bei ihrer Einführung in die Nut N13 bei einem Erstkontakt diese ausschließlich mit ihrem Schraubgewinde SG berührt, nicht jedoch mit ihrer Schraubspitze SS.

Die Nut N13 ist V-förmig und hat eine ("erste") Öffnung 1N01, die in der Weise ausgestaltet ist, dass ihr Querschnitt einen Öffnungswinkel B aufweist.

Die Schraube S1 weist eine Schraubspitze SS auf, deren Querschnitt einen Winkel C hat.

Der Winkel C des Querschnitts der Schraubspitze SS ist maximal in etwa gleich groß wie der vorgenannte Öffnungswinkel B des Querschnitts der Nut N13.

Figur 14a zeigt die Schraube S1 in einer Position vor ihrer Einführung in die Nut N13, während Figur 14b die Schraube S1 in der Position ihres Erstkontakts mit der Nut N13 zeigt.

Wie schon beschrieben, ist die Nut N13 ist in der Weise ausgestaltet, dass die Schraube S1 bei ihrer Einführung in die Nut N13 bei einem Erstkontakt diese mit ihrem Schraubgewinde SG berührt. Die Schraubspitze SS berührt bei diesem Erstkontakt nicht den Boden (Grundfläche) der Nut N13; vielmehr berührt das Schraubgewinde SG die seitlichen Ränder der Nut N13.

Figur 14c zeigt die Schraube S1 nach Abschluss des Einschraubvorgangs; im Zuge des Einschraubvorgangs wird das ("erste") Material M1 des Bauteils 11, das insbesondere aus einer aushärtbaren Legierung, insbesondere aus AlMgSi 0,5, besteht, verdrängt und zu einem Gewindetunnel GT geformt. Dieser umgibt die Schraube S1, insbesondere den Schraubkern, die Schraubspitze und das oberhalb der Schraubspitze angeordnete Schraubgewinde. Der durch den Einschraubvorgang gebildete Gewindetunnel GT verstärkt in vorteilhafter Weise die Fixierung der Schraube S1 im Bauteil 1.

Zum Ausformen des Gewindetunnels GT erfüllt das zweite Material M2 das insbesondere einsatzgehärteter Stahl, insbesondere mit einer Zinklamellenbeschichtung ist, eine Mindestanforderung von 5 bis 7 Newtonmeter. Die Schraube S1 ist vorzugsweise auf 10 Newtonmeter ausgelegt, um eine stabile Fixierung des Verbindungselements 2 mit dem Bauteil 1 zu erzielen. Mit der vorerwähnten Beschichtung wird eine Kontaktkorrosion der unterschiedlichen Materialien M1, M2 vermieden.

Mit der vorstehend beschriebenen Ausführungsform der Schraube S1, die aus dem zweiten Material M2, insbesondere aus einsatzgehärtetem Stahl, insbesondere mit einer Zinklamellenbeschichtung besteht, mit der Ausgestaltung des ersten Bauteils 11, das aus dem ersten Material M1 besteht, mit der Bildung eines Gewindetunnels aus dem ersten Material, mit der Anordnung der Eingriffselemente und der Öffnung im Verbindungselement 2 sowie mit der Anordnung der Nuten N11, N12 und N13 im ersten Bauteil 11 wird eine in einfacher Weise - mit wenig Verfahrensschrittenherstellbare Verbindung des ersten Bauteils 11 und des Verbindungselements 2 erzielt, die sich durch eine große mechanische Stabilität auszeichnet.

Figur 15 zeigt eine erste Schraube S, die vorzugsweise in die Öffnung 2.W10 der ersten Wand 2.W1 eines Verbindungselements 2 eingeführt und in die Nut N13 des ersten Bauteils 11 eingeschraubt wird. Die in den Figuren 15a, 15b und 15c dargestellte Nut N13 hat eine andere Form als die in die in den Figuren 14a, 14b und 14c dargestellte Nut N13.

In den Figuren 15a, 15b und 15b dargestellte Nut N13 hat anstelle der ersten Öffnung 1N01 (Figur 14) eine zweite Öffnung 1NO2. Die zweite Öffnung 1N02 hat eine Breite, die kleiner ist als der Durchmesser des Schraubkerns SK der Schraube S oder die gleich groß ist wie der der Durchmesser des Schraubkerns SK der Schraube S1.

Die Schraube S ist baugleich wie die anhand von Figur 14 beschriebene Schraube S1. Dies gilt auch für das Material M2: Das in Figur 15 dargestellte Bauteil 11 ist baugleich wie das anhand von Figur 14 beschriebene Bauteil 11. Dies gilt auch für das Material M1.

Die Erfindung ist für vorzugsweise für Balkon- und Terrassenabdeckungen einsetzbar; daneben ist sie auch in anderen Bereichen wie beispielsweise für Fassadenabdeckungen einsetzbar.

### Bezugszeichenliste

- 1: Anordnung
- 11, 12: Erstes, zweites Bauteil
- M1: Material des ersten bzw. zweiten Bauteils 11, 12

- 2: Verbindungselement
- 2.W1: Erste Wand von 2
- 2.W2: Zweite Wand von 2
- A: Winkel zwischen 2.W1 und 2.W2

- SB: Sollbiegestelle

- 2.W10: Erste Öffnung in 2.W1
- 2.W20: Zweite Öffnung in 2.W2

- 2.E11, ..., 2.E14: Erste Eingriffselemente in 2.W1
- 2.E21, ..., 2.E24: Zweite Eingriffselemente in 2.W2

- N11, N12, N13: Erste, zweite, dritte Nut in 11
- N21, N22, N23: Erste, zweite, dritte Nut in 12

- S1, S2: Erste, zweite Schraube
- SK: Schraubkern
- SS: Schraubspitze
- SG: Schraubgewinde
- M2: Material von S1, S

- 1NO1, 1NO2: Erste, zweite Öffnung in 1

- B: Öffnungswinkel des Querschnitts von N13
- C: Winkel des Querschnitts der Schraubspitze SS

## Patentansprüche

1. Anordnung (1) zur Verbindung von Bauteilen, insbesondere von zwei Bauteilen (11,12) einer Unterkonstruktion, insbesondere für Balkon- und Terrassenabdeckungen, wobei ein erstes Bauteil (11) und gegebenenfalls ein zweites Bauteil (12) mit einem Verbindungselement (2) verbunden sind,
**dadurch gekennzeichnet,dass**
- das Verbindungselement (2) eine erste Wand (2.W1) und eine zweite Wand (2.W2) aufweist,
- die erste Wand (2.W1) und die zweite Wand (41.W2) in einem vorgebbaren Winkel (A) zueinander angeordnet sind,
- dass die erste Wand (2.W1) im montierten Zustand an dem ersten Bauteil (11) anliegt und genau eine erste Öffnung (2.W1O) für genau eine erste Schraube (S1) aufweist,
- dass die erste Wand (2.W1) auf ihrer dem ersten Bauteil (11) zugewandten Seite erste Eingriffselemente (2.E11, ...) aufweist, die im montierten Zustand in korrespondierende Aufnahmeöffnungen des ersten Bauteils (11) eingreifen,
- dass die zweite Wand (2.W2) im montierten Zustand an dem zweiten Bauteil (12) anliegt und genau eine zweite Öffnung (2.W20) für genau eine zweite Schraube (S2) aufweist,
- dass die zweite Wand (2.W1) auf ihrer dem zweiten Bauteil (12) zugewandten Seite zweite Eingriffselemente (2.E21, ...) aufweist, die im montierten Zustand in korrespondierende Aufnahmeöffnungen des zweiten Bauteils (12) eingreifen,
- dass ein erster Teil (2.E11, ...) der Eingriffselemente (2.E11, ...) der ersten Wand (2.W1) im montierten Zustand in korrespondierende erste Aufnahmeöffnungen des ersten Bauteils (11) eingreifen,
- dass ein zweiter Teil (2.E13, ...) der Eingriffselemente (2.E11, ...) der ersten Wand (2.W1) im montierten Zustand in korrespondierende zweite Aufnahmeöffnungen des ersten Bauteils (11) eingreifen,
- dass ein erster Teil (2.E21, ...) der Eingriffselemente (2.E21, ...) der zweiten Wand (2.W2) im montierten Zustand in korrespondierende erste Aufnahmeöffnungen des zweiten Bauteils (12) eingreifen,
- dass ein zweiter Teil (2.E23, ...) der Eingriffselemente (2.E21, ...) der zweiten Wand (2.W2) im montierten Zustand in korrespondierende zweite Aufnahmeöffnungen des zweiten Bauteils (12) eingreifen,
- dass die ersten Aufnahmeöffnungen des ersten Bauteils (11) durch eine erste Nut (N11) des ersten Bauteils (11) gebildet sind,
- dass die zweiten Aufnahmeöffnungen des ersten Bauteils (11) durch eine zweite Nut (N12) des ersten Bauteils (11) gebildet sind,
- dass die ersten Aufnahmeöffnungen des zweiten Bauteils (12) durch eine erste Nut (N21) des zweiten Bauteils (12) gebildet sind,
- dass die zweiten Aufnahmeöffnungen des zweiten Bauteils (12) durch eine zweite Nut (N22) des zweiten Bauteils (12) gebildet sind, und
- dass die erste Wand (2.W1) und die zweite Wand (2.W2) des Verbindungselements (2) in einem vorgebbaren Winkel (A) zwischen >0° und 180° zueinander angeordnet sind.

2. Anordnung nach Anspruch 1, **dadurch gekennzeichnet,**
- **dass** die erste Wand (2.W1) des Verbindungselements (2) drei oder vier erste Eingriffselemente (2.E11, ...) aufweist, und/oder
- **dass** die zweite Wand (2.W1) des Verbindungselements (2) drei oder vier zweite Eingriffselemente (2.E21, ...) aufweist.

3. Anordnung nach Anspruch 2, **dadurch gekennzeichnet,**
- **dass** das Verbindungselement (2) drei erste Eingriffselemente (2.E11, ...) aufweist,
- **dass** ein erster Teil (2.E11, ...) der ersten Eingriffselemente (2.E11, ...) im montierten Zustand in die erste Nut (N11) des ersten Bauteils (11) eingreift, und
- **dass** ein zweiter Teil (2.E13, ...) der ersten Eingriffselemente (2.E11, ...) im montierten Zustand in die zweite Nut (N12) des ersten Bauteils (11) oder in eine dritte Nut (N13) des ersten Bauteils (11) eingreift.

4. Anordnung nach Anspruch 2 oder 3, **dadurch gekennzeichnet,**
- **dass** das Verbindungselement (2) drei zweite Eingriffselemente (2.E21, ...) aufweist,
- **dass** ein erster Teil (2.E11, ...) der zweiten Eingriffselemente (2.E21, ...) im montierten Zustand in die erste Nut (N21) des zweiten Bauteils (12) eingreift, und
- **dass** ein zweiter Teil (2.E23, ...) der zweiten Eingriffs elemente (2.E21, ...) im montierten Zustand in die zweite Nut (N22) des zweiten Bauteils (12) oder in eine dritte Nut (N23) des zweiten Bauteils (12) eingreift.

5. Anordnung (1) nach einem der vorstehenden Ansprüche 1, **dadurch gekennzeichnet,**
- **dass** die ersten Eingriffselemente (2.E11, ...) und/oder die zweiten Eingriffselemente (2.E21, ...) erhaben ausgeformt sind, insbesondere noppenförmig, keilförmig oder als Feder.

6. Anordnung (1) nach einem der vorstehenden Ansprüche, **dadurch gekennzeichnet,**
- **dass** das Verbindungselement (2) eine Sollbiegestelle (SB) zwischen der ersten Wand (2.W1) und der zweiten Wand (2.W2) aufweist.

7. Anordnung (1) nach einem der vorstehenden Ansprüche, **dadurch gekennzeichnet,**
- **dass** das erste Bauteil (11) und das zweite Bauteil (12) horizontal zueinander oder vertikal zueinander angeordnet sind.

8. Anordnung (1) nach einem der vorstehenden Ansprüche, **dadurch gekennzeichnet,**
- **dass** das Verbindungselement (2) eine Zwischenwand (ZW) aufweist, die zwischen der ersten Wand (2.W1) und der zweiten Wand (2.W2) angeordnet ist.

9. Anordnung (1) nach einem Ansprüche 3 bis 8, **dadurch gekennzeichnet,**
- **dass** die dritte Nut (N13) in der Weise ausgestaltet ist, dass die erste Schraube (S1) bei ihrer Einführung in die dritte Nut (N13) bei einem Erstkontakt diese ausschließlich mit ihrem Schraubgewinde (SG) berührt,
- **dass** das erste Bauteil (1) aus einem ersten Material (M1), insbesondere aus einer aushärtbaren Legierung, insbesondere aus AlMgSi 0,5, besteht und einen durch die eingeschraubte erste Schraube (S1) gebildeten Gewindetunnel (GT) aus verdrängtem ersten Material (M1) aufweist, und
- **dass** die erste Schraube (S1) aus einem zweiten Material (M2), insbesondere aus einsatzgehärtetem Stahl, insbesondere mit einer Zinklamellenbeschichtung, besteht.

10. Anordnung nach Anspruch 9, **dadurch gekennzeichnet,**
- **dass** die dritte Nut (N13) V-förmig mit einer ersten Öffnung (1NO1) in der Weise ausgestaltet ist, dass ihr Querschnitt einen Öffnungswinkel (B) aufweist,
- **dass** die erste Schraube (S1) einen Schraubkern (SK) und eine Schraubspitze (SS) aufweist, die einen Querschnitt mit einem Winkel (C) aufweist,
- **dass** der Winkel (C) des Querschnitts der Schraubspitze (SS) maximal in etwa gleich groß ist wie der Öffnungswinkel (B) des Querschnitts der dritten Nut (N13), oder
- **dass** die dritte Nut (N13) mit einer zweiten Öffnung (1N02) in der Weise ausgestaltet ist, dass die zweite Öffnung (1N02) eine Breite hat, die kleiner ist als der Durchmesser des Schraubkerns (SK) oder die gleich groß ist wie der Durchmesser des Schraubkerns (SK).

11. Verbindungselement (2) für eine Anordnung (1) zur Verbindung von Bauteilen, insbesondere von zwei Bauteilen (11,12) einer Unterkonstruktion, insbesondere für Balkon- und Terrassenabdeckungen, nach einem der vorstehenden Ansprüche, wobei ein erstes Bauteil (11) und gegebenenfalls ein zweites Bauteil (12) mit dem Verbindungselement (2) verbunden sind,
**dadurch gekennzeichnet, dass**
- das Verbindungselement (2) eine erste Wand (2.W11) und eine zweite Wand (2.W2) aufweist,
- die erste Wand (2.W1) und die zweite Wand (41.W2) in einem vorgebbaren Winkel (A) zueinander angeordnet sind,
- dass die erste Wand (2.W1) im montierten Zustand an dem ersten Bauteil (11) anliegt und genau eine erste Öffnung (2.W10) für genau eine erste Schraube (S1) aufweist,
- dass die erste Wand (2.W1) auf ihrer dem ersten Bauteil (11) zugewandten Seite erste Eingriffselemente (2.E11, ...) aufweist, die im montierten Zustand in korrespondierende erste Aufnahmeöffnungen des ersten Bauteils (11) eingreifen,
- dass die zweite Wand (2.W2) im montierten Zustand an dem zweiten Bauteil (12) anliegt und genau eine zweite Öffnung (2.W20) für genau eine zweite Schraube (S2) aufweist, die insbesondere wie die erste Schraube (S1) ausgestaltet ist,
- dass die zweite Wand (2.W1) auf ihrer dem zweiten Bauteil (12) zugewandten Seite zweite Eingriffselemente (2.E21, ...) aufweist, die im montierten Zustand in korrespondierende zweite Aufnahmeöffnungen des zweiten Bauteils (12) eingreifen.

12. Verbindungselement (2) nach Anspruch 11, **dadurch gekennzeichnet, dass** die ersten Eingriffselemente (2.E.11, ...) und/oder die zweiten Eingriffselemente (2.E21, ...) erhaben ausgeformt sind, insbesondere noppenförmig, keilförmig oder als Feder.

13. Verbindungselement (2) nach Anspruch 11 oder 12, **dadurch gekennzeichnet, dass** die erste Wand (2.W1) und die zweite Wand (2.W2) in einem vorgebbaren Winkel (A) zwischen >0° und 180° zueinander angeordnet sind.

14. Verbindungselement (2) nach einem der Ansprüche 11 bis 13, **dadurch gekennzeichnet, dass** das Verbindungselement (2) eine Sollbiegestelle (SB) zwischen der ersten Wand (2.W1) und der zweiten Wand (2.W2) aufweist.

15. Verbindungselement (2) nach einem der Ansprüche 11 bis 14, **dadurch gekennzeichnet,**
- **dass** die erste Wand (2.W1) unterhalb der zweiten Wand (2.W2) angeordnet ist, oder
- **dass** die erste Wand (2.W1) neben der zweiten Wand (2.W2) angeordnet ist, und
- **dass** die erste Wand (2.W1) und die zweite Wand (2.W2) gleiche oder unterschiedliche Abmessungen aufweisen.
